# EUROPÄISCHE PATENTANMELDUNG

(11) **EP 2 896 931 A1**
(43) Veröffentlichungstag der Anmeldung: **22.07.2015**
(21) Anmeldenummer: 14151947.0
(22) Anmeldetag: 21.01.2014
(51) Int. Cl.: G01B 21/04, G01B 7/00, G01B 11/00, G01S 17/66

(54) **Vorrichtung und Verfahren zur Bestimmung der Lageänderung eines 3D-Messkopfes**

(71) Anmelder: Aimess Services GmbH, 39288 Burg (DE)
(72) Erfinder: Wiedenmann, Ernst, 73431 Aalen (DE)
(74) Vertreter: Grünecker Patent- und Rechtsanwälte PartG mbB

(57) **Zusammenfassung**

Die Erfindung betrifft eine Vorrichtung zum Bestimmen der Lageänderung eines 3D-Messkopfes, umfasst einen 3D-Messkopf; wenigstens eine mit dem 3D-Messkopf verbundene Sensoreinrichtung zur Erfassung einer jeweiligen lageabhängigen Messgröße; und eine Auswerteeinrichtung zum Bestimmen einer Lageänderung des 3D-Messkopfes an einer Endlage relativ zu einer Ausgangslage aus der wenigstens einen erfassten Messgröße; wobei die Lageänderung eine Verschiebung im Raum und eine Drehung im Raum umfasst. Die Erfindung betrifft weiterhin ein entsprechendes Verfahren.

## Beschreibung

### Gebiet der Erfindung

Die Erfindung betrifft eine Vorrichtung und eine Verfahren zum Bestimmen der Lageänderung eines 3D-Messkopfes.

### Stand der Technik

Zum Registrieren von verschiedenen Aufnahmen eines Objekts mit einem 3D-Messkopf werden nach dem Stand der Technik bisher drei verschiedene Methoden eingesetzt. Erstens können Marken oder geometrische Körper (z.B. Kugeln) auf dem zu vermessenden Objekt angebracht werden, die aufgrund ihrer Lage zueinander oder durch eindeutige Codierung in verschiedenen Aufnahmen wiedererkannt werden und dann zueinander registriert werden. Zweitens können Positioniersysteme (z.B. Roboterarm, 3D Koordinatenmessgerät) eingesetzt werden, die die Lage im Raum des Messkopfes genau bestimmen. Drittens können als universelle Methode nur Softwarealgorithmen (z.B. ICP) eingesetzt werden, die versuchen die Punktewolken der verschiedenen Messungen so zu überlagern, dass eine Punktewolke in einem einheitlichen Koordinatensystem erzeugt wird. Dieses zuletzt genannte Verfahren hat aber den großen Nachteil, dass es nur bei Körpern mit eindeutigen Merkmalen funktionieren kann. Eine Kugel kann damit prinzipiell nicht registriert werden. Die bisher bekannten Verfahren des mathematischen Ausrichtens funktionieren daher nur in einem sehr eingeschränkten Objektbereich zuverlässig.

### Beschreibung der Erfindung

Aufgabe der Erfindung ist, eine Vorrichtung und eine Verfahren ohne die genannten Nachteile zur Verfügung zu stellen.

Diese Aufgabe wird gelöst durch die erfindungsgemäße Vorrichtung nach Patentanspruch 1.

Die erfindungsgemäße Vorrichtung zum Bestimmen der Lageänderung eines 3D-Messkopfes, umfasst einen 3D-Messkopf; wenigstens eine mit dem 3D-Messkopf verbundene Sensoreinrichtung zur Erfassung einer jeweiligen lageabhängigen Messgröße; und eine Auswerteeinrichtung zum Bestimmen einer Lageänderung des 3D-Messkopfes an einer Endlage relativ zu einer Ausgangslage aus der wenigstens einen erfassten Messgröße; wobei die Lageänderung eine Verschiebung im Raum und eine Drehung im Raum umfasst.

Auf diese Weise ist es möglich, beispielsweise das interne Koordinatensystem des Messkopfes an einer neuen Position mit Hilfe der Sensordaten aus dem Koordinatensystem der ursprünglichen Position zu berechnen. Das neue Koordinatensystem ist dabei durch eine beliebige Verschiebung und Drehung aus dem ursprünglichen Koordinatensystem hervorgegangen.

Die erfindungsgemäße Vorrichtung kann dahingehend weitergebildet werden, dass die Auswerteeinrichtung weiterhin dazu ausgebildet sein kann, Lageänderungen an weiteren Endlagen zu bestimmen. Somit können beispielsweise mehrere Aufnahmen aus verschiedenen Blickwinkeln miteinander in Beziehung gebracht werden.

Eine andere Weiterbildung besteht darin, dass die Auswerteeinrichtung weiterhin dazu ausgebildet sein kann, ein internes Koordinatensystem jeder Endlage aus dem internen Koordinatensystem der Ausgangslage zu berechnen. Auf diese Weise ist jedes interne Koordinatensystem jeder Endlage mit dem internen Koordinatensystem der Ausgangslage registriert.

Gemäß einer anderen Weiterbildung kann jede Sensoreinrichtung einen Sensor oder mehrere Sensoren aufweisen. Dies kann die Genauigkeit der Messung erhöhen.

Eine andere Weiterbildung der zuvor genannten Weiterbildung besteht darin, dass jeder Sensor aus der Gruppe ausgewählt sein kann, welche Magnetometer, WLAN-Sensor, Mobilfunkempfänger, Gyroskop, Bluetooth Sensor, Beschleunigungssensor und Drehratensensor umfasst. Somit können verschiedene physikalische Größen zur Bestimmung der Lageänderung eingesetzt und kombiniert werden.

Gemäß einer anderen Weiterbildung kann die erfindungsgemäße Vorrichtung oder eine deren Weiterbildungen weiterhin Mittel zum Erzeugen der jeweiligen lageabhängigen Messgröße umfassen. Dies hat den Vorteil, dass die Messgröße, deren Veränderung bei Lageänderung des Messkopfes erfasst wird, kontrolliert werden kann, beispielsweise in Richtung und Größe. Z.B. könnte eine elektrische Spule zur Erzeugung eines inhomogenen Magnetfeldes vorgesehen sein, wenn der Sensor ein Magnetfeldsensor ist.

Eine andere Weiterbildung besteht darin, dass der 3D-Messkopf ein taktiler Messkopf, ein optischer Messkopf, ein Lichtschnittsensor oder ein Laserscanner sein kann.

Die obern genannte Aufgabe wird weiterhin gelöst durch das erfindungsgemäße Verfahren nach Patentanspruch 8.

Das erfindungsgemäße Verfahren zum Bestimmen der Lageänderung eines 3D-Messkopfes umfasst die Schritte: Bewegen des 3D-Messkopfes von einer Ausgangslage in eine Endlage; Erfassen wenigstens einer lageabhängigen Messgröße mit einer jeweiligen am 3D-Messkopf befestigten Sensoreinrichtung; und Bestimmen einer Lageänderung des 3D-Messkopfes an der Endlage relativ zu der Ausgangslage aus der wenigstens einen erfassten lageabhängigen Messgröße; wobei das Bestimmen der Lageänderung das Bestimmen einer Verschiebung im Raum und das Bestimmen einer Drehung im Raum umfasst.

Die Vorteile des erfindungsgemäßen Verfahrens und dessen nachfolgend beschriebenen Weiterbildungen entsprechen jenen der erfindungsgemäßen Vorrichtung und deren Weiterbildungen.

Das erfindungsgemäße Verfahren kann dahingehen weitergebildet werden, dass als zusätzlicher Schritt zuvor ein Erzeugen der lageabhängigen Messgröße durchgeführt wird. Beispielsweise kann ein Magnetfeld erzeugt werden, welches dann mit einem Magnetometer als Sensor erfasst werden kann.

Das erfindungsgemäße Verfahren oder die genannte Weiterbildung kann dahingehen weitergebildet werden, dass das Verfahren weiterhin ein Bewegen des 3D-Messkopfes an weitere Endlagen und Bestimmen der Lageänderung an den weiteren Endlagen umfassen kann.

Eine andere Weiterbildung besteht darin, dass der folgende weitere Schritt vorgesehen sein kann: Berechnen eines internen Koordinatensystems jeder Endlage aus dem internen Koordinatensystem der Ausgangslage.

Gemäß einer anderen Weiterbildung kann die Positionsänderung im Raum in Bezug auf drei linear unabhängige Verschiebungsachsen des internen Koordinatensystems der Ausgangslage oder der Endlage bestimmt werden und die Drehung im Raum im Bezug auf drei linear unabhängige Drehachsen des internen Koordinatensystems der Ausgangslage oder der Endlage bestimmt werden, wobei die drei Verschiebungsachsen vorzugsweise identisch mit den drei Drehachsen sind.

Eine andere Weiterbildung der zuvor genannten Weiterbildung besteht darin, dass die drei linear unabhängigen Positionsachsen senkrecht zueinander stehen und/oder wobei die drei linear unabhängigen Drehachsen senkrecht zueinander stehen.

Gemäß einer anderen Weiterbildung kann das Verfahren den folgenden weiteren Schritt umfassen: Registrieren des internen Koordinatensystems jeder Endlage in einem Weltkoordinatensystem.

Eine andere Weiterbildung der zuvor genannten Weiterbildung besteht darin, dass mit dem 3D-Messkopf gemessene Punkte in dem Weltkoordinatensystem dargestellt werden.

Die Weiterbildungen könne unabhängig voneinander eingesetzt oder geeignet miteinander kombiniert werden.

### Kurze Beschreibung der Zeichnungen

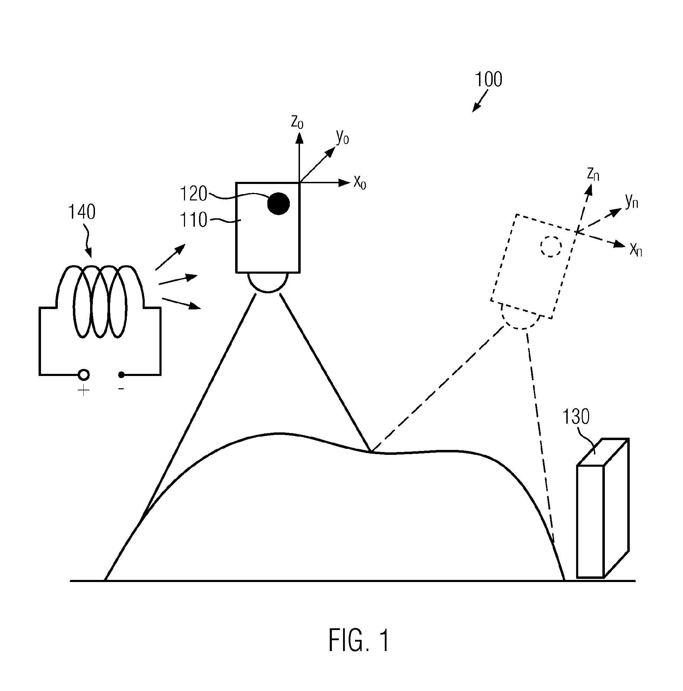

Fig. 1 zeigt schematisch eine Ausführungsform der erfindungsgemäßen Vorrichtung.

### Beschreibung der Ausführungsformen

Figur 1 zeigt schematisch eine erfindungsgemäße Vorrichtung zum Bestimmen der Lageänderung eines 3D-Messkopfes.

In dieser Ausführungsform umfasst die Vorrichtung 100 einen 3D-Messkopf 110, wenigstens einen mit dem 3D-Messkopf verbundenen Sensor 120 zur Erfassung einer lageabhängigen Messgröße, und eine Auswerteeinrichtung 130 zum Bestimmen einer Lageänderung des 3D-Messkopfes an einer Endlage relativ zu einer Ausgangslage aus der wenigstens einen erfassten Messgröße; wobei die Lageänderung eine Verschiebung im Raum und eine Drehung im Raum umfasst. In dieser Ausführungsform ist der 3D-Messkopf beispielsweise als Laserscanner vorgesehen. Der Sensor 120 kann als Magnetometer zur Messung der Größe und Richtung eines definiert vorgegebenen Magnetfeldes am Ort des Sensors sein. In diesem Fall kann optional eine Einheit 140 zur Erzeugung eines inhomogenen Magnetfeldes vorgesehen sein, welches durch das Magnetometer erfasst wird. Schließlich können die erfassten Messwerte an eine Auswerteeinrichtung 130 in Form eines Computers übermittelt werden (verdrahtet oder drahtlos). Bei einer Lageänderung des Messkopfes 120 aus einer ursprünglichen Lage mit dem Koordinatensystem O₀ (X₀, Y₀, Z₀) in eine neue Lage mit dem Koordinatensystem Oₙ (Xₙ, Yₙ, Zₙ) kann außer einer Verschiebung auch eine Drehung erfolgen. Aus dem geänderten Messwert des Sensors 120 kann mit Hilfe der Auswerteeinrichtung 130 eine Registrierung des neuen Koordinatensystems in Bezug auf das ursprüngliche erfolgen.

Bei den Sensoren, die ein inhomogenes räumliches Feld vermessen, reicht bei einem bekannten Feld theoretisch ein Sensor 120. Normalerweise ist aber das Feld nicht genügend genau bekannt und die Lageänderung kann aufgrund zu kleiner Gradienten auch nicht genügend genau bestimmt werden. Im Speziellen können Magnetometer, WLAN-Sensoren, Mobilfunkempfänger, Gyroskope, Beschleunigungssensoren, Bluetooth-Sensoren, oder Drehratensensoren verwendet werden. Zur Genauigkeitssteigerung können mehrere Sensoreinrichtungen (Einheit von verschiedenen Sensoren, die eine 6-Achs Bestimmung erlauben) verbaut werden.

Die Erfindung offenbart ein Verfahren und eine Vorrichtung zur Bestimmung der Lageänderung von 3D Messköpfen im Raum. Dazu werden verschiedene Sensoren fest mit dem Messkopf (Scankopf, also der Teil eines 3D Messsystems, der Koordinatenpunkte im Raum bestimmt) verbaut, die eine 6-Achsen Bestimmung der Lageänderung im Raum erlauben, wobei die Lageänderung in Bezug auf drei Verschiebungsachsen und drei Drehachsen bestimmt wird. Somit ist es möglich, das interne Koordinatensystem Oₙ des Messkopfes an einer Position n mit Hilfe der Sensordaten aus dem Koordinatensystem O₀ der ursprünglichen Position zu berechnen. Die Position n wird durch ein beliebiges Verschieben und Verdrehen des Sensorkopfes im Raum aus der ursprünglichen Position hergestellt. Durch die Kenntnis des neuen Koordinatensystems Oₙ wird es möglich, verschiedene Ansichten (Patches) ohne weitere Hilfsmittel miteinander zuverlässig zu registrieren bzw. die in den jeweiligen Positionen ermittelten 3D-Datenpunkte in einem gemeinsamen Weltkoordinatensystem darzustellen.

## Patentansprüche

1. Vorrichtung zum Bestimmen der Lageänderung eines 3D-Messkopfes, umfassend:
einen 3D-Messkopf;
wenigstens eine mit dem 3D-Messkopf verbundene Sensoreinrichtung zur Erfassung einer jeweiligen lageabhängigen Messgröße; und
eine Auswerteeinrichtung zum Bestimmen einer Lageänderung des 3D-Messkopfes an einer Endlage relativ zu einer Ausgangslage aus der wenigstens einen erfassten Messgröße;
wobei die Lageänderung eine Verschiebung im Raum und eine Drehung im Raum umfasst.

2. Vorrichtung nach Anspruch 1, wobei die Auswerteeinrichtung weiterhin dazu ausgebildet ist, Lageänderungen an weiteren Endlagen zu bestimmen.

3. Vorrichtung nach Anspruch 1 oder 2, wobei die Auswerteeinrichtung weiterhin dazu ausgebildet ist, ein internes Koordinatensystem jeder Endlage aus dem internen Koordinatensystem der Ausgangslage zu berechnen.

4. Vorrichtung nach einem der Ansprüche 1 bis 3, wobei jede Sensoreinrichtung einen Sensor oder mehrere Sensoren aufweist.

5. Vorrichtung nach Anspruch 4, wobei jeder Sensor ausgewählt ist aus der Gruppe welche Magnetometer, WLAN-Sensor, Mobilfunkempfänger, Gyroskop, Bluetooth Sensor, Beschleunigungssensor und Drehratensensor umfasst.

6. Vorrichtung nach einem der Ansprüche 1 bis 5, weiterhin umfassend:
Mittel zum Erzeugen der jeweiligen lageabhängigen Messgröße.

7. Vorrichtung nach einem der Ansprüche 1 bis 6, wobei der 3D-Messkopf ein taktiler Messkopf, ein optischer Messkopf, ein Lichtschnittsensor oder ein Laserscanner ist.

8. Verfahren zum Bestimmen der Lageänderung eines 3D-Messkopfes, mit den Schritten:
Bewegen des 3D-Messkopfes von einer Ausgangslage in eine Endlage;
Erfassen wenigstens einer lageabhängigen Messgröße mit einer jeweiligen am 3D-Messkopf befestigten Sensoreinrichtung; und
Bestimmen einer Lageänderung des 3D-Messkopfes an der Endlage relativ zu der Ausgangslage aus der wenigstens einen erfassten lageabhängigen Messgröße;
wobei das Bestimmen der Lageänderung das Bestimmen einer Verschiebung im Raum und das Bestimmen einer Drehung im Raum umfasst.

9. Verfahren nach Anspruch 8, wobei zuvor der folgende Schritt durchgeführt wird:
Erzeugen der lageabhängigen Messgröße.

10. Verfahren nach Anspruch 8 oder 9, wobei das Verfahren weiterhin umfasst:
Bewegen des 3D-Messkopfes an weitere Endlagen und Bestimmen der Lageänderung an den weiteren Endlagen.

11. Verfahren nach einem der Ansprüche 8 bis 10, weiterhin umfassend den Schritt:
Berechnen eines internen Koordinatensystems jeder Endlage aus dem internen Koordinatensystem der Ausgangslage.

12. Verfahren nach Anspruch 11, wobei die Positionsänderung im Raum in Bezug auf drei linear unabhängige Verschiebungsachsen des internen Koordinatensystems der Ausgangslage oder der Endlage bestimmt wird und die Drehung im Raum im Bezug auf drei linear unabhängige Drehachsen des internen Koordinatensystems der Ausgangslage oder der Endlage bestimmt wird, wobei die drei Verschiebungsachsen vorzugsweise identisch mit den drei Drehachsen sind.

13. Verfahren nach Anspruch 12, wobei die drei linear unabhängigen Positionsachsen senkrecht zueinander stehen und/oder wobei die drei linear unabhängigen Drehachsen senkrecht zueinander stehen.

14. Verfahren nach einem der Ansprüche 11 bis 13, weiterhin umfassend den Schritt:
Registrieren des internen Koordinatensystems jeder Endlage in einem Weltkoordinatensystem.

15. Verfahren nach Anspruch 14, wobei mit dem 3D-Messkopf gemessene Punkte in dem Weltkoordinatensystem dargestellt werden.
